# EUROPEAN PATENT APPLICATION

(11) **EP 4 826 372 A1**
(43) Date of publication of application: **21.10.2026**
(21) Application number: 25171062.0
(22) Date of filing: 16.04.2025
(51) Int. Cl.: G01N 29/02, G01N 9/00, G01N 29/036, G01N 29/22

(54) **MEASUREMENT SYSTEM FOR DETERMINING A PHYSICAL PROPERTY OF A FLUID IN A PIPE-FLUID SYSTEM**

(71) Applicant: ABB SCHWEIZ AG, 5400 Baden (CH)
(72) Inventor: SCHOLLMAYER, Tim, 68309 Mannheim (DE); GEBHARDT, Joerg, 55130 Mainz (DE); MIGUNOV, Vadim, 68526 Ladenburg (DE); SZASZ, Paul, 68723 Plankstadt (DE)
(74) Representative: Maiwald GmbH

(57) **Abstract**

The present invention relates to a measurement system (100) for determining a physical property of a fluid (1) in a pipe-fluid system (150), comprising:
- a clamping element (3) that is arranged around the pipe-fluid system (150) and that comprises a first clamping element (3a) and second clamping element (3b), wherein the first clamping element (3a) and the second clamping element (3b) form a measurement section (4) that corresponds to a segment (2a) of the pipe-fluid system (150);
- an excitation system (5) that is configured to excite the pipe-fluid system (150) and to induce a vibration of the measurement system (100);
- a vibration sensing element (6) that is configured to measure the induced vibration; and
- an element that is configured to break a symmetry of the measurement system (100) and the pipe-fluid system (150) in a circumferential direction of the measurement system (100) to influence a measured frequency spectrum measured by the vibration sensing element (6).

## Description

### FIELD OF THE INVENTION

The present invention relates to a measurement system for determining a physical property of a fluid in a pipe-fluid system.

### BACKGROUND OF THE INVENTION

Clamp-on vibration-based systems of a physical property or a physical property of a fluid typically consist of a pipe segment confined between two clamps, a device for vibration excitation and a sensor for measuring the pipe vibration frequency. The EP4036552 A1, the EP4273538 A 1 and the US12163973 B2 describe such a measurement system in the prior art.

The system relates the change of the frequency of a selected vibration mode of the pipe-fluid system to the physical property.

Typically, the vibration sensor device is attached to the pipe and measures the frequency spectrum at one or several defined coordinates of the pipe section that corresponds to a measurement section under consideration. The frequency spectrum is then investigated regarding its change in characteristic eigenfrequencies to assess the change of the physical property.

However, the drawback of such a solution is that, due to the sensitivity of the vibrations, the boundary conditions, small imperfections of the clamps or the pipe segment of the pipe-fluid system, e.g. due to manufacturing tolerances, can introduce change of the vibration frequency which can be misinterpreted as a change of the physical property of the fluid in the pipe-fluid system and therefore lead to faulty gauging of the physical property of the fluid.

Therefore, design and tolerances of the confining clamps, tolerances/ovalities of the pipe section as well as external disturbances such as forces due to fluid flow or external vibrations change the frequency spectrum at individual positions on the pipe segment of the pipe-fluid system.

In particular, the above-mentioned factors, through influencing the orientation of the vibration modes, can introduce a splitting of the peaks or additional interfering peaks in the frequency spectrum recorded at the position of the vibration sensor. The occurrence of degenerated vibration modes, in particular a splitting of the peaks, in the frequency spectrum is typical for pipe vibrations due to the cylindrical symmetry of a pipe-fluid system.

Splitting of the peaks is caused by symmetry breakings that are dependent upon multiple factors including tolerances and external influences as mentioned above. Moreover, change of process conditions, e.g. temperature or flow, can influence the symmetry of the system and therefore change position of the interfering peaks or amount of the splitting. This may result in a faulty calculation of the frequency change or a misinterpretation of change due to the interfering peaks frequency and consequently to lower accuracy or a faulty gauging when determining the physical property of the fluid of the pipe-fluid system.

There is a need to address these issues.

### SUMMARY OF THE INVENTION

Therefore, it would be advantageous to provide a concept for an improved measurement of a physical property of a fluid in a pipe-fluid system.

The object of the present invention is solved by the subject matter of the independent claims, wherein further embodiments are incorporated in the dependent claims.

In a first aspect of the present invention, there is provided a measurement system for determining a physical property of a fluid in a pipe-fluid system, comprising:
- a clamping element that is arranged around the pipe-fluid system and that comprises a first clamping element and second clamping element, wherein the first clamping element and the second clamping element form a measurement section that corresponds to a segment of the pipe-fluid system;
- an excitation system that is configured to excite the pipe-fluid system and to induce a vibration of the measurement system;
- a vibration sensing element that is configured to measure the induced vibration; and
- an element that is configured to break a symmetry of the measurement system and the pipe-fluid system in a circumferential direction of the measurement system to influence a measured frequency spectrum measured by the vibration sensing element.

In other words, an important aspect of the present invention in a general manner is to accurately measure a physical property of a fluid of or in a pipe-fluid system based on frequency analysis so to mitigate influences of component tolerances and by flow as well as disturbances which hinder a distinctive eigenfrequency analysis of the pipe.

The present invention allows to adjust and stabilize the pipe-fluid system characteristics in a way that component tolerances and external influences have negligible impact onto the frequency spectrum of the pipe-fluid system at the position of the vibration sensing element.

The element may be embodied according to the present invention in at least three different manners that are described in detail in this patent application. In particular, the advantageous effects may be achieved by using an element that is an additional mass element or tuning element that is arranged within the pipe-fluid system in a certain manner or position near the vibration sensing element. In a further way, the clamping element and / or a damping element may also contribute to achieve the aforementioned advantages of the present invention.

According to an example, the element is an additional mass element that is configured to tune the measured vibration at the vibration sensing element. In this way, an accurate and robust measurement of the physical property of the fluid is enabled.

According to an example, the mass element is attached to the vibration sensing element and/or near the vibration sensing element within the measurement section. In this way, an accurate and robust measurement of the physical property of the fluid is enabled.

According to an example, the mass element is an integral part of the vibration sensing element. In this way, an accurate and robust measurement of the physical property of the fluid is enabled.

According to an example, wherein the mass element is a part of the pipe-fluid system itself. In this way, an accurate and robust measurement of the physical property of the fluid is enabled.

According to an example, the mass element is arranged between the vibration sensing element and the pipe-fluid system. In this way, an accurate and robust measurement of the physical property of the fluid is enabled.

According to an example, the mass element comprises of a plurality of mass elements within the measurement section connected to the measurement system or the pipe-fluid system. In this way, an accurate and robust measurement of the physical property of the fluid is enabled.

According to an example, the plurality of mass elements has a different mass and/or a same mass. In this way, an accurate and robust measurement of the physical property of the fluid is enabled.

According to an example, the mass element is configured as the excitation system. In this way, compactness of the measurement system is achieved.

According to an example, the element comprises at least partly the clamping element (3, 3a, 3b) that is configured as an asymmetric clamp element configured to tune the measured vibrations at the vibration sensing element and wherein the first clamping element and the second clamping element of the asymmetric clamp element is further configured to impact on the fluid-pipe system. In this way, an accurate and robust measurement of the physical property of the fluid is enabled.

According to an example, the clamping element comprises of an oval-shaped inner contour for impressing an ovality shape onto the pipe-fluid system. In this way, an accurate and robust measurement of the physical property of the fluid is enabled.

According to an example, the clamping element comprises of a number of contact pins that enable contact to the pipe-fluid system. In this way, an accurate and robust measurement of the physical property of the fluid is enabled.

According to an example, the element comprises a damping element is attached to the pipe-fluid system and / or wherein the damping element is configured to implement a contactless damping. In this way, an accurate and robust measurement of the physical property of the fluid is enabled.

According to an example, the element is part of the excitation system and is configured to excite the pipe-fluid system at least at one defined position within the measurement section and / or is configured to define an intensity of the excitation at one or multiple and coordinated excitation points around the circumferential direction of the pipe-fluid system within the measurement section. In this way, an accurate and robust measurement of the physical property of the fluid is enabled.

### BRIEF DESCRIPTION OF THE DRAWINGS

Exemplary embodiments will be described in the following with reference to the following drawings:
Fig. 1 illustrates a schematic (vibration) measurement system according to an embodiment of the present invention;
Fig. 2a illustrates a schematic configuration of the element of the measurement system according to an embodiment of the present invention;
Fig. 2b illustrates a schematic configuration of the element of the measurement system according to an embodiment of the present invention;
Fig. 2c illustrates a schematic configuration of the element of the measurement system according to an embodiment of the present invention;
Fig. 2d illustrates a schematic configuration of the element of the measurement system according to an embodiment of the present invention;
Fig. 2e illustrates a schematic configuration of the element of the measurement system according to an embodiment of the present invention; and
Fig. 2f illustrates a schematic configuration of the element of the measurement system according to an embodiment of the present invention.

### DETAILED DESCRIPTION OF THE DRAWINGS

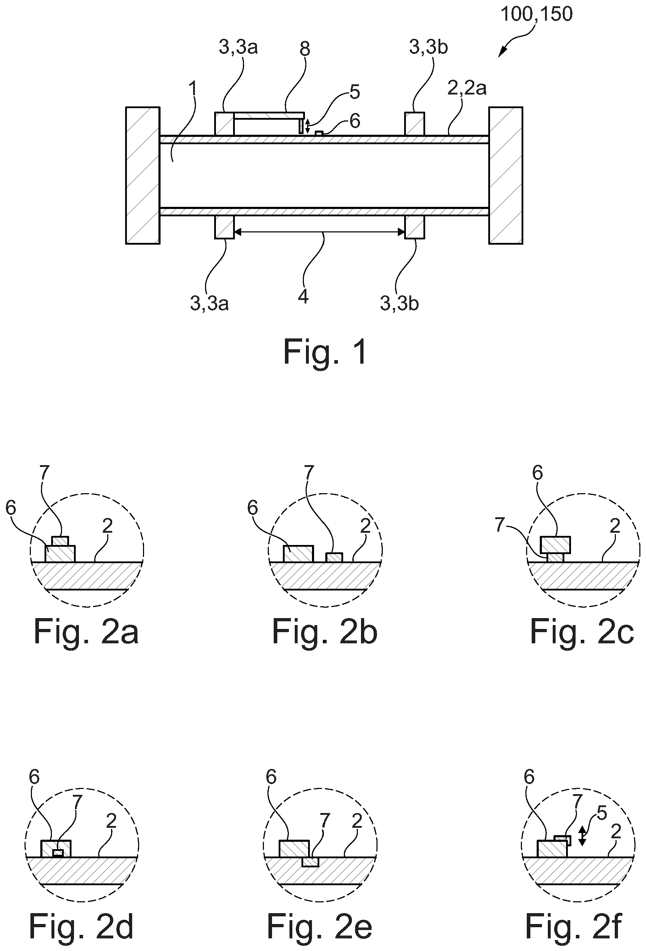

Fig. 1 in combination with Fig. 2a to 2f illustrate a schematic (vibration) measurement system 100 for determining a physical property or a physical parameter of a fluid 1 in or of a pipe-fluid system 150.

The measurement system 100 for determining a physical property or a physical parameter (e.g. density, viscosity, flow parameter etc.) of a fluid 1,wherein the fluid 1 may be a liquid or a gas, in a pipe-fluid system 150, comprising a clamping element or a confining element 3 that is arranged around the pipe-fluid system 150 and that comprises a first clamping element 3a and a second clamping element 3b, wherein the first clamping element 3a and the second clamping element 3b form a measurement section 4 that corresponds to a pipe segment 2a of the pipe 2 of the pipe-fluid system 150.

The pair of confining elements 3 is configured to decrease surface vibration deformations at an outer surface of each end of the pipe-fluid system 150, wherein each confining element 3, 3a, 3b may comprise a supporting frame configured to be detachably mounted on a pipe 2 of the pipe-fluid system 150.

Further, the measurement system 100 comprises an excitation system 5 that is configured to excite the pipe-fluid system 150 and to induce a vibration of the measurement system 100.

The excitation system 5 may be arranged at a first excitation position which could be around a circumference of the pipe 2 within the measurement section 4 of the pipe segment 2a of the pipe 2. The pipe segment 2a may be part of the measurement section 4.

Further, the measurement system 100 comprises a vibration sensing element 6 that is configured to measure the induced vibration and that may be configured to generate a mechanical vibration spectrum at a surface of the pipe-fluid system 150. The vibration sensing element 6 may be an accelerometer. As can be seen in an example in Fig. 1, the vibration sensing element or sensing device 6 may be arranged at a measurement position within the measurement section 4 of the pipe segment 2a of the pipe 2.

The sensing element 6 may be further configured to be mechanically coupled to an outer surface of the pipe-fluid system 150, and configured to provide a mechanical vibration spectrum of the pipe-fluid system 150. The sensing element 6 may be for example a microphone.

The measurement system 100 may further comprise a fixation element configured to be detachably mounted for mechanically coupling the supporting frame with an outer surface of the pipe 2 (not shown in the figures).

In a further possible embodiment of the present invention, the measurement system 100 may further comprise a support structure, configured to carry the excitation system 5 and enabling the excitation system 5 to generate the mechanical excitation; and a protective housing enclosing the pair of confining elements 3, 3a, 3b, an vibration sensing element or vibration sensing device 6, and the excitation system 5.

Further, as shown in Fig. 2a to 2f, the measurement system 100 comprises an element that is configured to break a symmetry of the measurement system 100 in a circumferential direction of the measurement system 100 and the pipe-fluid system 150 to influence a measured frequency spectrum measured by the vibration sensing element 6. The element is further configured to promote isolated vibration frequencies at the position of the vibration sensing element 6.

In this respect, it should be noted that the excitation influences not only the measurement system 100 but also has an impact on the pipe-fluid system 150. This means that the entity participating in the vibration is everything: the fluid 1, the pipe 2, the pipe-fluid system 100 in general and the measurement system 100.

The pipe-fluid system 150 may also comprise of a pipe 2. The pipe 2 contains the fluid 1.

Further, as shown in Fig. 1, in an example of the measurement system 100, a cantilever 8 is used that is part of the excitation system 5 in order to fasten the excitation system 5.

In a possible first embodiment of the present invention (category 1) regarding the breaking of symmetry, the element may be a mass element 7 that is installed or arranged on the pipe 2 of the pipe-fluid system 150 in different positions or locations, e.g. at any point around the pipe circumference in the measurement section 4 of the pipe 2, as it is described in the following and in particular as shown in Fig. 2a to 2f in various, but not limiting examples.

In this manner, the mass of the vibration sensing element 6 (attached to the pipe 2) is increased, e.g. by placing an additional mass element onto the vibration sensing element 6 (see Figure 1). The mass element 7 added may be a stainless steel cylinder glued on top of the vibration sensing element (accelerometer) 6. The total mass of the accelerometer and possible additional weights may for example beneficially be higher than about 0.1 % than the mass of the pipe segment confined between the clamps 3, 3a, 3b.

Due to the higher mass the signal deterioration is strongly reduced (see Figures 2a-d). This manifests itself in the eigenfrequencies appearing to be well defined (single peaks in frequency spectrum), which enables the gauging of the underlying physical property in real-world conditions with present component tolerances, e.g. ovality, diameter variations, wall thickness variations, as well as disturbances, e.g. flow, vibration.

As already described before, component tolerances, e.g. ovality, diameter variations, wall thickness variations, and disturbance (e.g. flow, external vibrations), can significantly impact the measured frequency spectrum of pipe sections. Therefore, this susceptibility can be mitigated by deliberately breaking the symmetry of the system, e.g. by adding a tuning mass element to the accelerometer 6 or pipe 2 of the pipe-fluid system 150.

Optionally, the element that is configured to break the symmetry of the measurement system (100) and the pipe-fluid system (150)" is an additional mass element 7 that is configured to tune the measured vibration at the vibration sensing element 6.

Optionally, the mass element or tuning element 7 is attached to the vibration sensing element 6 (cf. Fig. 2a) and/or near the vibration sensing element 6 within the measurement section 4 (cf. Fig. 2b).

Optionally, the vibration sensing element 6 may be fastened to the mass element 7 and the mass element 7 and / or the excitation system 5 is fastened to the pipe.

Optionally, as shown in Fig. 2c, the mass element 7 is arranged between the vibration sensing element 6 and the pipe-fluid system 150.

Optionally, and as shown in Fig. 2d, the mass element 7 is an integral part of the vibration sensing element 6.

Optionally, and as shown in Fig. 2e, the mass element 7 is a part of the pipe-fluid system 150 itself. This could mean that the mass element 7 is installed or arranged inside the pipe 2 or is part of the pipe 2.

Optionally, as shown in Fig. 2f, the mass element 7 may be embodied as the excitation system 5 and the vibration sensing element 6 The advantage achieved is that fewer components are needed, e.g. the cantilever may be obsolete, and a better compactness of the measurement system is achieved.

Optionally, the mass element 7 may be embodied as the excitation system 5. The advantage achieved is that fewer components are needed, e.g. the cantilever may be obsolete, and a better compactness of the measurement system is achieved.

Optionally, the mass element 7 comprises of a plurality of mass elements within the measurement section 4.

Optionally, the plurality of mass elements 7 has a different mass and/or a same mass. This means that a number of mass elements 7 are installed on the measurement system 100 and that the masses of these multiple mass elements 7 may have different mass and / or a same mass. The plurality of mass element 7 may be arranged at different locations around a circumferential and/or axial position of the pipe 2 within the measurement section 4.

Optionally, the mass element 7 may be in an axial direction to the accelerometer/vibration sensor 6.

Optionally, the mass element 7 may be on the opposite side (180°) of the accelerometer.

Optionally, the mass element 7 may be in axial direction to the excitation system 5.

Optionally, the mass element 7 may be on the opposite side (180°) of the excitation system 5.

Optionally, the mass element 7 can be variable, to be adjusted during commissioning, in order to be minimized on one side, but removing unwanted asymmetry and splitting effects on the other side.

Optionally, the mass element 7 could be fixed on a thread-like structure in the form of nuts of different sizes.

One could devise a tuning procedure, e.g. where the measurement mode's quality factor and/or the frequency spectrum is monitored/controlled during the tuning process.

The following embodiments (category 2) regarding the aim to break the symmetry refer to a specific design of the clamps 3, 3a, 3b.

Optionally, the element comprises at least partly the clamping element 3, 3a, 3b that is configured as an asymmetric clamp element configured to tune the measured vibrations at the vibration sensing element 6 and wherein the first clamping element 3a and the second clamping element 3b of the asymmetric clamp element 3, 3a, 3b is further configured to impact on the fluid-pipe system 150.

The impact may be for example, but not limited to this, a defined stiffness. Or in other words, the first clamping element 3a is configured to apply a certain and defined mechanical impact on the pipe 2, e.g. a certain stiffness, that is the same or different to the mechanical impact, e.g. stiffness, applied by the second clamping element 3b installed on the pipe 2

Optionally, the clamping element 3, 3a, 3b comprises of an oval-shaped inner contour for impressing an ovality shape onto the pipe-fluid system 150.

Optionally, the clamping element 3, 3a, 3b comprises of a number of contact pins that enable contact to the pipe-fluid system 150. This means that the contact pins have an asymmetric impact on the pipe 1 in a circumferential direction of the pipe 1 to break the symmetry in a circumferential direction.

The following embodiments (category 3) regarding the breaking of symmetry refer to a possible solution by directly or indirectly acting onto any point around the pipe circumference in the measurement section.

Optionally, the element comprises a damping element that is attached to the pipe-fluid system 150, e.g. at a section of the pipe 2 or at the pipe segment 2a within the measurement section 4, and / or wherein the damping element is configured to implement a contactless damping by using at every occurrence for example one the following damping methods: electromagnetic damping, ultrasonic damping. Optionally, at least one separate damping element may be used for the pipe-fluid system 150.

Optionally, the element 7 is part of the excitation system 5 and is configured to excite the pipe-fluid system 150 at least at one defined position within the measurement section 4 and / or is configured to define an intensity of the excitation at one or multiple and coordinated excitation points around the circumferential direction of the pipe-fluid system 150 within the measurement section 4. Further, the excitation system 5 is configured to apply a force to the pipe 2 of the pipe-fluid system 150 within the measurement section 4 to induce the vibration.

### Reference signs

- 1: Fluid
- 2: Pipe
- 2a: Pipe segment
- 3: Clamping element / Confinement
- 3a: First clamping element
- 3b: Second clamping element
- 4: Measurement section
- 5: Excitation system
- 6: Vibration sensing element
- 7: Mass element
- 8: Cantilever

- 100: Measurement system
- 150: Pipe-fluid system

## Claims

1. A measurement system (100) for determining a physical property of a fluid (1) in a pipe-fluid system (150), comprising:
- a clamping element (3) that is arranged around the pipe-fluid system (150) and that comprises a first clamping element (3a) and second clamping element (3b), wherein the first clamping element (3a) and the second clamping element (3b) form a measurement section (4) that corresponds to a segment (2a) of the pipe-fluid system (150);
- an excitation system (5) that is configured to excite the pipe-fluid system (150) and to induce a vibration of the measurement system (100);
- a vibration sensing element (6) that is configured to measure the induced vibration; and
- an element that is configured to break a symmetry of the measurement system (100) and the pipe-fluid system (150) in a circumferential direction of the measurement system (100) to influence a measured frequency spectrum measured by the vibration sensing element (6).

2. Measurement system (100) according to claim 1, wherein the element is an additional mass element (7) that is configured to tune the measured vibration at the vibration sensing element (6).

3. Measurement system (100) according to claim 2, wherein the mass element (7) is attached to the vibration sensing element (6) and/or near the vibration sensing element (6) within the measurement section (4).

4. Measurement system (100) according to any one of the previous claims 2 to 3, wherein the mass element (7) is an integral part of the vibration sensing element (6).

5. Measurement system (100) according to any one of the previous claims 2 to 3, wherein the mass element (7) is a part of the pipe-fluid system (150) itself.

6. Measurement system (100) according to any one of the previous claims 2 to 3, wherein the mass element (7) is arranged between the vibration sensing element (6) and the pipe-fluid system (150).

7. Measurement system (100) according to any one of the previous claims 2 to 5, wherein the mass element (7) comprises of a plurality of mass elements within the measurement section (4).

8. Measurement system (100) according to claim 7, wherein the plurality of mass elements has a different mass and/or a same mass.

9. Measurement system (100) according to any one of the previous claims, wherein the mass element (7) is configured as the excitation system (5).

10. Measurement system (100) according to claim 1, wherein the element comprises at least partly the clamping element (3, 3a, 3b) that is configured as an asymmetric clamp element configured to tune the measured vibrations at the vibration sensing element (6) and/or wherein the first clamping element (3a) and the second clamping element (3b) of the asymmetric clamp element (3, 3a, 3b) is further configured to impact on the fluid-pipe system (150).

11. Measurement system (100) according to one of the previous claims, wherein the clamping element (3, 3a, 3b) comprises of an oval-shaped inner contour for impressing an ovality shape onto the pipe-fluid system (150).

12. Measurement system (100) according to one of the previous claims, wherein the clamping element (3, 3a, 3b) comprises of a number of contact pins that enable contact to the pipe-fluid system (150).

13. Measurement system (100) according to one of the previous claims, wherein the element comprises a damping element that is attached to the pipe-fluid system (150) and / or wherein the damping element is configured to implement a contactless damping.

14. Measurement system (100) according to one of the previous claims, wherein the element (7) is part of the excitation system (5) and is configured to excite the pipe-fluid system (150) at least at one defined position within the measurement section (4) and / or is configured to define an intensity of the excitation at one or multiple and coordinated excitation points around the circumferential direction of the pipe-fluid system (150) within the measurement section (4).
